# DEMANDE DE BREVET EUROPEEN

(11) **EP 1 080 774 A1**
(43) Date de publication de la demande: **07.03.2001**
(21) Numéro de dépôt: 00402381.8
(22) Date de dépôt: 29.08.2000
(51) Int. Cl.: B01D 53/22, C01B 23/00

(54) **Procédé d'élimination par perméation des composés fluorés ou fluorosoufres d'un flux de xénon et/ou de krypton**

(30) Priorité: 06.09.1999 FR 9911114
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Fraysse, Philippe, 78180 Montigny le Bretonneux (FR)
(74) Mandataire: Le Moenner, Gabriel

(57) **Abrégé**

L'invention concerne un procédé et une installation pour éliminer les composés gazeux fluorés ou fluoro-soufrés, tels CF₄, C₂F₆ et SF₆, présents dans un flux de xénon et/ou de krypton, par perméation au moyen d'une ou plusieurs membranes, telles des membranes polymères. Le xénon et/ou le krypton ainsi produit peut ensuite être davantage purifié ou séparé par distillation cryogénique. Préalablement à l'étape de perméation, les autres impuretés, en particulier les hydrocarbures, peuvent être éliminées par catalyse oxydative et adsorption subséquente du dioxyde de carbone et de l'eau produits. Le xénon, le krypton et les mélanges de xénon et de krypton exempts de composés gazeux fluorés ou fluoro-soufrés et purifiés par un tel procédé peuvent être utilisés en tant que gaz de propulsion plasmique notamment pour satellites ou en tant que gaz d'isolation inter-parois pour élément étanche, en particulier pour fenêtres à double vitrage.

## Description

La présente invention concerne un procédé de purification d'un flux gazeux contenant du krypton (Kr) et/ou du xénon (Xe), lequel flux gazeux contient, en outre, des impuretés fluorées et/ou fluoro-soufrées et éventuellement d'autres impuretés devant être séparées dudit flux gazeux, tels que l'oxygène et/ou des hydrocarbures (CₙHₘ), ledit flux gazeux pouvant être ensuite séparé par distillation cryogénique pour produire du krypton ou du xénon de haute pureté ou, à l'inverse, être un gaz résiduaire d'un tel procédé de distillation cryogénique.

La production de xénon ou de krypton est habituellement effectuée à partir d'air atmosphérique, lequel air est séparé par distillation cryogénique, de manière à obtenir, d'une part, les composés classiquement récupérés, à savoir de l'azote, de l'oxygène et/ou de l'argon, et, d'autre part, un mélange gazeux contenant essentiellement du xénon, du krypton et des impuretés choisies parmi les hydrocarbures (CₙHₘ), l'oxygène et des composés fluorés ou fluoro-soufrés, tels que CF₄, C₂F₆ ou SF₆, par exemples.

Ensuite, ce mélange gazeux contenant essentiellement du xénon, du krypton et des impuretés est :
- soit directement séparé et purifié pour obtenir, d'une part, du xénon et, d'autre part, du krypton,
- soit conditionné et stocké dans des récipients de conditionnement, telles des bouteilles de gaz, avant d'être postérieurement séparé et purifié comme dans le premier cas.

Il existe actuellement plusieurs techniques connues permettant d'éliminer les impuretés fluorées ou fluoro-soufrées, tels les composés CF₄, C₂F₆ ou SF₆, pouvant être contenues dans un gaz ou un mélange gazeux.

Parmi ces techniques connues, on peut citer la chimisorption, la technique du plasma et la destruction catalytique à chaud.

Ainsi, la technique de chimisorption des impuretés fluorées sur matériau adsorbant de type phyllosilicates, telle que décrite par le document EP-A-863 375, est difficile à mettre en oeuvre au plan industriel de par la complexité du procédé et pose certains problèmes de fiabilité.

D'autres documents proposent d'éliminer les composés fluorées, souvent appelés PFC (pour Per Fluoro Compounds = Composés Per Fluorés), au moyen de membranes polymères.

Ainsi, le document EP-A-754487 propose un procédé très efficace pour éliminer par perméation, au moyen d'une ou plusieurs membranes polymères, les PFC contenus dans un flux gazeux constitué d'un gaz vecteur, tel l'air, l'oxygène, l'azote, l'hélium, le CO₂, le xénon, le CO, la vapeur d'eau, l'hydrogène, le krypton, le néon ou l'argon, pollué par des PFC. Ce procédé est particulièrement adapté à l'élimination des PFC contenus dans un flux gazeux issu d'un procédé de fabrication de semiconducteurs.

Par ailleurs, le document WO-A-90/15662 décrit l'utilisation d'une membrane perméable sélective pour séparer un mélange gazeux, en particulier une membrane constituée d'un polymère amorphe de type perfluoro-2,2-diméthyl-1,3-dioxole. Le mélange gazeux peut être de l'air, un mélange gazeux de type azote/oxygène, lequel contient éventuellement un ou plusieurs composés organiques, tels des composés fluoro-carbonés ou tout autre composé volatile, tel le Fréon ™.

En outre, le document EP-A-358915 décrit un système à membrane pour la séparation des gaz, dans lequel toute dégradation de la membrane est minimisée ou évitée en réalisant une élimination des impuretés de type hydrocarbures lourds par adsorption de ceux-ci sur un lit de charbon actif situé en amont de la membrane.

Par ailleurs, les documents JP-A-61187918 et JP-A-4322716 portent sur l'utilisation d'une membrane formée d'un fluoro-copolymère pour éliminer la vapeur d'eau, c'est-à-dire sécher, un gaz humide, tel HCI, CF4, C₂F₆ ou similaires.

De façon plus générale, on peut citer aussi le document JP-A-4016213 qui décrit la perméation sélective d'alcools légers, tel l'éthanol, contenus dans un mélange gazeux à travers une membrane constituée d'un polymère résistant à la chaleur ; le document JP-A-61187918 enseignant l'utilisation d'une membrane formée d'un fluoro-copolymère pour séparer un gaz utilisé dans une opération de brasage ; et le document US-A-5,383,957 ayant trait à un système membranaire utilisable pour produire de l'azote à partir d'air.

Il existe, en outre, d'autres publications plus ou moins spécifiques faisant état de procédés utilisant des membranes pour séparer un mélange gazeux, à savoir les documents US-A-4,957,513, US-A-4,941,893, US-A-4,178,224, US-A-4,424,067, EP-A-239190, JP-A-60022902, US-A-4,701,187, US-A-4,880,441, US-A-4,881,953, US-A-4,988,371, US-A-5,051,114, US-A-5,064,447, US-A-5,256,295, US-A-5,281,253, US-A-5,282,964, US-A-5,282,969, US-A-5,290,341 et WO-A-95/18674.

Toutefois, ces différentes techniques sont souvent complexes à mettre en oeuvre au plan industriel, engendrent parfois des problèmes de fiabilité et de sécurité, et nécessitent un investissement, dans certains cas, important, ainsi que des coûts opératoires souvent élevés.

De plus, certains de ces procédés ne sont pas applicables à la purification de mélanges gazeux contenant essentiellement du xénon et/ou du krypton et/ou ne permettent pas d'éliminer efficacement toutes les impuretés susceptibles d'être présentes dans le flux gazeux, à savoir principalement les composés fluorés ou fluoro-soufrés.

Le but de la présente invention est alors de proposer un procédé amélioré permettant d'obtenir une élimination efficace des impuretés fluorées ou fluoro-soufrées contenues dans un flux gazeux de xénon et/ou de krypton, lequel procédé soit facile à mettre en oeuvre et de coût acceptable au plan industriel.

En d'autres termes, la présente invention vise à proposer un procédé de séparation et de purification d'un flux gazeux contenant du krypton et du xénon, ainsi que des impuretés, de manière à éliminer efficacement lesdites impuretés (composés fluorés ou fluoro-soufrés).

En outre, dans le cas d'un mélange krypton / xénon devant être séparé en chacun de ces composants, l'invention vise également à proposer, en variante, un procédé de séparation efficace du mélange krypton / xénon ainsi obtenu et ce, pour produire, d'une part, du xénon de haute pureté et, d'autre part, du krypton de haute pureté, combiné à une élimination efficace desdits composés fluorés ou fluoro-soufrés.

L'invention concerne alors un procédé pour éliminer au moins une partie des composés gazeux fluorés et/ou fluoro-soufrés présents dans un flux gazeux d'alimentation contenant, de préférence essentiellement, du xénon et/ou du krypton, dans lequel :
(i) on met en contact le flux gazeux d'alimentation contenant du xénon et/ou du krypton et au moins lesdits composés gazeux fluorés et/ou fluoro-soufrés avec au moins une première membrane,
(ii) on récupère, côté sortie d'au moins ladite première membrane, un gaz de production contenant du xénon et/ou du krypton débarrassé d'au moins une partie desdits composés gazeux fluorés et/ou fluoro-soufrés.

Dans le cadre de l'invention, on appelle "membrane" tout moyen de perméation, notamment les membranes prises en tant que telles, mais aussi les modules membranaires, notamment les modules membranaires à fibres creuses, ou encore les membranes céramiques ou similaires.

Par ailleurs, dans le cadre de l'invention, par "côté sortie", on entend le côté de la membrane où l'on récupère le gaz produit, c'est-à-dire le gaz substantiellement épuré en impuretés fluorées ou fluoro-soufrées. Dans le cas d'une membrane à perméabilité classique, le "côté sortie" est le côté perméat, alors que dans le cas d'une membrane à perméabilité inverse, le côté sortie est le côté retentât.

Par analogie, dans le cadre de l'invention, par "côté gaz-déchet", on entend le côté de la membrane opposé à celui où l'on récupère le gaz produit, c'est-à-dire le côté de la membrane par lequel sort un gaz enrichi en impuretés fluorées ou fluoro-soufrées. Dans le cas d'une membrane à perméabilité classique, le "côté gaz-déchet " est le côté retentât, alors que dans le cas d'une membrane à perméabilité inverse, le "côté gaz-déchet" est le côté perméat.

Selon une première variante, l'invention concerne aussi un procédé pour éliminer au moins une partie des composés gazeux fluorés et/ou fluoro-soufrés présents dans un gaz d'alimentation formé d'un mélange de xénon et de krypton, dans lequel :
(i) on met en contact le gaz d'alimentation contenant du xénon et du krypton et desdits composés gazeux fluorés et/ou fluoro-soufrés avec au moins une première membrane,
(ii) on récupère, côté sortie d'au moins ladite première membrane, un gaz de production formé d'un mélange de xénon et/ou de krypton débarrassé d'au moins une partie desdits composés gazeux fluorés et/ou fluoro-soufrés,
(iii) on soumet le gaz de production formé d'un mélange de xénon et/ou de krypton à au moins une étape de distillation cryogénique,
(iv) on récupère, après distillation cryogénique, un flux de krypton approximativement exempt desdits composés gazeux fluorés et/ou fluoro-soufrés, et/ou un flux de xénon approximativement exempt desdits composés gazeux fluorés et/ou fluoro-soufrés.

Selon une deuxième variante, l'invention concerne aussi un procédé pour éliminer au moins une partie des composés gazeux fluorés et/ou fluoro-soufrés présents dans un gaz de recyclage issu d'un procédé générant au moins ledit gaz de recyclage, ledit gaz de recyclage contenant du xénon et/ou du krypton et contenant, en outre, des composés gazeux fluorés et/ou fluoro-soufrés en tant qu'impuretés, dans lequel :
(i) on met en contact le gaz de recyclage contenant du xénon et/ou du krypton et desdits composés gazeux fluorés et/ou fluoro-soufrés avec au moins une première membrane,
(ii) on récupère, côté sortie d'au moins ladite première membrane, un gaz de production contenant du xénon et/ou du krypton débarrassé d'au moins une partie desdits composés gazeux fluorés et/ou fluoro-soufrés, de préférence au moins une partie dudit gaz de production étant ensuite envoyée vers le procédé générant au moins ledit gaz de recyclage pour y être éventuellement réutilisé.

Selon le cas, le procédé de l'invention peut comprendre l'une ou plusieurs des caractéristiques suivantes :
- à l'étape (ii), on récupère, côté gaz-déchet de ladite première membrane, un flux de gaz-déchet contenant au moins une partie desdits composés gazeux fluorés et/ou fluoro-soufrés. Ce flux de gaz-déchet est sensiblement à la même pression que celle du flux de gaz d'alimentation entrant dans ladite première membrane mais contient une proportion supérieure de composés fluorés ou fluoro-soufrés que celle du gaz d'alimentation, c'est-à-dire que le flux de gaz-déchet est enrichi en composés fluorés ou fluoro-soufrés par rapport au flux de gaz d'alimentation.
- le flux gazeux d'alimentation contient au moins 40% de xénon et/ou de krypton, de préférence au moins 50% de xénon et/ou de krypton, de préférence au moins 70% de xénon et/ou de krypton, de préférence au moins 80% de xénon et/ou de krypton, et/ou le flux gazeux d'alimentation contient du xénon et du krypton en une proportion d'au plus 99,999%.
- le flux gazeux d'alimentation contient de 1 ppb à 300 000 ppm de composés fluorés ou fluoro-soufrés, de préférence de 10 ppb à 50000 ppm de composés fluorés ou fluoro-soufrés.
- au moins une partie du flux gazeux d'alimentation est un gaz résiduaire provenant d'une ou plusieurs colonnes de distillation cryogénique, lequel gaz résiduaire a éventuellement fait l'objet d'un prétraitement, d'un conditionnement et/ou d'un stockage.
- les composés fluorés ou fluoro-soufrés à éliminer sont choisis parmi les composés CF₄, C₂F₆, SF₆ et leurs mélanges.
- le flux gazeux d'alimentation contient de 0.01 ppm à 1000 ppm de CF₄, de 0.01 ppm à 1000 ppm de SF₆ et/ou de 0.01 ppm à moins de 200 ppm de C₂F₆.
- le flux gazeux de production récupéré à l'étape (ii), du côté sortie de ladite première membrane et contenant au moins une partie du xénon et/ou du krypton, est introduit par l'entrée d'alimentation d'au moins une deuxième membrane de perméation.
- le flux de gaz-déchet récupéré à l'étape (ii), du côté gaz-déchet de ladite première membrane et contenant au moins une partie desdits composés gazeux fluorés et/ou fluoro-soufrés est introduit par l'entrée d'alimentation d'au moins une troisième membrane de perméation.
- le flux gazeux d'alimentation est à une température de -10°C à +100°C, de préférence à une température de 0°C à + 60°C. Si nécessaire, la température du flux gazeux d'alimentation peut être régulée ou ajustée pour la porter ou la maintenir dans cette plage de température, par chauffage ou, selon le cas, par refroidissement.
- le flux gazeux d'alimentation est à une pression de 1 bar à 50 bars, de préférence le flux est à une pression de 3 bars à 30 bars, préférentiellement de l'ordre de 6 bars à 12 bars environ, lors de sa mise en contact avec ladite première membrane de perméation. Si nécessaire, la pression du flux gazeux d'alimentation peut être régulée ou ajustée pour la porter ou la maintenir dans cette plage de pression.
- au moins une membrane est en polymère. Par exemple, des membranes susceptibles d'être utilisées dans le cadre de l'invention sont décrites dans le document EP-A-754487 ou dans d'autres documents cités par ledit document EP-A-754487.
- le flux gazeux d'alimentation contient, en outre, des impuretés choisies parmi les hydrocarbures (CₙHₘ), tels le méthane et les hydrocarbures pour lesquels n= 2 ou n=3, et on élimine au moins une partie desdites impuretés par catalyse oxydative desdites impuretés en CO₂ et H₂O, en présence d'oxygène et à une température comprise entre 80°C et 600°C, de préférence de l'ordre de 150°C à 500°C.
- on élimine, par adsorption ou séchage sur au moins un adsorbant, au moins une partie des impuretés CO₂ et H₂O produites par catalyse oxydative ou éventuellement présentes dans le flux de gaz d'alimentation, de préférence au moins un adsorbant est choisi parmi les zéolites, les alumines ou les gels de silice.
- l'adsorbant comprend une zéolite de type A ou faujasite, de préférence une zéolite de type X ayant un rapport Si/AI compris entre 1 et 1.10, et/ou une alumine activée, de préférence une alumine activée contenant ou imprégnée par des cations métalliques, en particulier le potassium ou le sodium. Bien entendu, la zéolite peut également être échangée par des cations métalliques, tels le lithium, le calcium ou analogues.
- l'étape d'adsorption est opérée à une température comprise entre environ -40°C et +100°C, de préférence à une température comprise entre +5°C et +50°C, et/ou à une pression d'adsorption comprise entre 1 et 100 bar, de préférence entre 1.1 bar et 50 bar.
- l'étape d'adsorption est opérée selon un cycle PSA (Pressure Swing Adsorption = Adsorption à variation de pression) ou TSA (Température Swing Adsorption = Adsorption à variation de température), de préférence TSA.
- le gaz de production récupéré à l'étape (ii) est soumis à au moins une étape de refroidissement à une température inférieure à -5°C, de préférence à une température de -10°C à -150°C.
- le flux gazeux de production récupéré à l'étape (ii), du côté sortie de la première membrane est introduit par l'entrée d'alimentation d'une deuxième membrane, on récupère, côté gaz-déchet de ladite deuxième membrane, un deuxième gaz-déchet et on introduit ledit deuxième gaz gaz-déchet dans le flux gazeux d'alimentation.
- le flux de gaz-déchet récupéré à l'étape (ii), du côté gaz-déchet de la première membrane est introduit par l'entrée d'alimentation d'une troisième membrane, on récupère, côté sortie de ladite troisième membrane, un deuxième gaz de production et on introduit ledit deuxième gaz de production dans le flux gazeux d'alimentation.

En outre, l'invention porte aussi sur un procédé pour éliminer au moins une partie des composés gazeux fluorés ou fluoro-soufrés, en particulier CF₄, C₂F₆ et/ou SF₆, présents dans un flux gazeux de xénon et/ou de krypton, de préférence un mélange de xénon et de krypton, dans lequel au moins une partie desdits composés fluorés est séparée par une ou plusieurs étapes de perméation, selon le cas, au moyen d'une ou plusieurs membranes de type classique ou inverse.

Selon un autre aspect, l'invention concerne une installation pour éliminer les composés gazeux fluorés et/ou fluoro-soufrés présents dans un gaz d'alimentation formé de xénon et/ou de krypton, susceptible de mettre en oeuvre un procédé selon l'invention, comprenant :
- au moins une source d'un gaz d'alimentation contenant du xénon et/ou du krypton et des composés gazeux fluorés et/ou fluoro-soufrés à éliminer,
- des moyens de compression du gaz d'alimentation, tel un compresseur de gaz,
- au moins une membrane reliée, par sa sortie de production, à des moyens de récupération de gaz de production formé de xénon et/ou de krypton et débarrassé d'au moins une partie desdits composés gazeux fluorés et/ou fluoro-soufrés.

En variante, l'invention a trait également sur une installation pour éliminer les composés gazeux fluorés et/ou fluoro-soufrés présents dans un gaz d'alimentation formé de xénon et/ou de krypton, susceptible de mettre en oeuvre un procédé selon l'invention, comprenant :
- au moins une source d'un gaz d'alimentation contenant du xénon et/ou du krypton et des composés gazeux fluorés et/ou fluoro-soufrés à éliminer,
- des moyens de compression du gaz d'alimentation,
- au moins une membrane, reliée par sa sortie de production à des moyens de récupération de gaz de production formé de xénon et/ou de krypton et débarrassé d'au moins une partie desdits composés gazeux fluorés et/ou fluoro-soufrés.
- des moyens de refroidissement à température cryogénique du gaz de production situés en aval d'au moins ladite membrane,
- des moyens de distillation cryogénique du gaz de production situés en aval des moyens de refroidissement à température cryogénique,
- des moyens de récupération, situés en aval des moyens de distillation cryogénique, pour récupérer du krypton approximativement exempt desdits composés gazeux fluorés et/ou fluoro-soufrés, et/ou du xénon approximativement exempt desdits composés gazeux fluorés et/ou fluoro-soufrés.

Selon un mode de réalisation particulier, l'installation de l'invention, comporte, en outre, au moins une membrane reliée, par sa sortie gaz-déchet, à des moyens de recyclage de gaz-déchet contenant du xénon et/ou du krypton et éventuellement des composés gazeux fluorés et/ou fluoro-soufrés, lesdits moyens de recyclage de gaz-déchet étant reliés, en outre, à l'entrée d'alimentation desdits moyens de compression, de manière à pouvoir alimenter lesdits moyens de compression avec au moins une partie dudit gaz-déchet.

Plus généralement, dans le cadre de la présente invention, il a été mis en évidence qu'il est possible de profiter des propriétés de perméabilité et de sélectivité des membranes, en particulier des membranes polymères, pour séparer, de manière très efficace, les molécules de krypton et/ou de xénon, d'une part, et les impuretés CF₄, C₂F₆ et SF₆, d'autre part.

En effet, étant donné que, d'une part, les composés fluoro-soufrés de type SF₆ et que, d'autre part, les composés fluorés, en particulier les composés CF₄ et C₂F₆, ne perméent que très peu, voire pas du tout, à travers les membranes classiques, notamment, polymères, il est possible de séparer efficacement les mélanges gazeux contenant du krypton et du xénon et des polluants du type CF₄, C₂F₆ et/ou SF₆, en profitant de la très forte sélectivité des membranes, en particulier les membranes polymères, pour le xénon et le krypton vis-à-vis des impuretés fluorées ou fluoro-soufrées.

Lors de la séparation, le xénon et le krypton se retrouvent et sont récupérés essentiellement côté sortie ou perméat de la ou des membranes utilisées, lorsque celles-ci sont de type classique..

En contrepartie de la très grande simplicité du procédé, il faut rappeler qu'il faut une sélectivité très élevée pour prétendre séparer les molécules avec un bon rendement ou une bonne pureté.

L'invention va maintenant être illustrée à l'aide d'exemples de modes de réalisation, donnés à titre illustratif mais non limitatif, en références aux figures annexées.

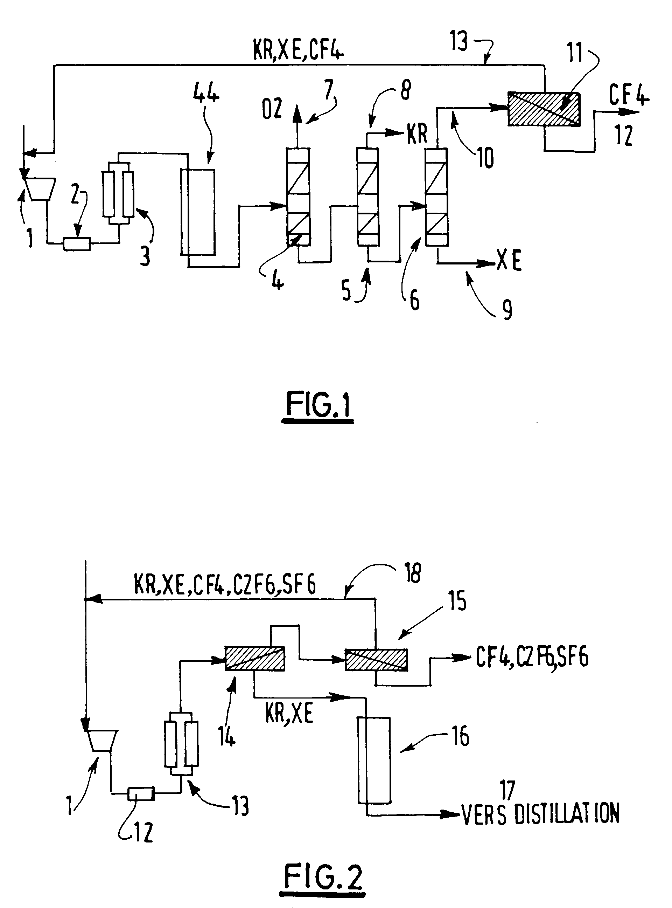

La figure 1 illustre l'application d'un procédé selon l'invention à la purification des gaz résiduaires contenant du xénon et du krypton, et des impuretés de type CF₄ résultant de la séparation par distillation cryogénique du xénon et du krypton à partir d'un mélange gazeux Xe/Kr pollué par des impuretés CF₄ et d'autres impuretés, tels de l'oxygène et des hydrocarbures.

Plus précisément, un mélange gazeux Xe/Kr/CF₄/O₂/CₙHₘ (teneur totale Xe+Kr >50%) est comprimé (en 1) à une pression de l'ordre de 6 à 12 bars, avant d'être soumis à une oxydation catalytique (en 2) destinée à oxyder, en présence d'oxygène et à une température d'au moins 120°C, les traces d'hydrocarbures (CₙHₘ) en dioxyde de carbone (CO₂) et vapeur d'eau (H₂O).

Ensuite, le flux gazeux résultant est séché et décarbonaté (en 3) pour éliminer la vapeur d'eau et le dioxyde de carbone formés ou initialement présents, respectivement, au moyen d'un système d'adsorption à deux adsorbeurs fonctionnant de manière alternée et contenant chacun un lit d'alumine pour éliminer la vapeur d'eau et un lit de zéolite pour éliminer le CO₂.

Ensuite, le flux gazeux sortant de la zone d'adsorption est refroidi à une température cryogénique inférieure à environ -80°C dans un ou plusieurs échangeurs thermiques 44, de préférence à une température comprise entre -100°C et -150°C.

Le mélange Kr/Xe/CF₄O₂ ainsi refroidi est alors soumis à plusieurs étapes de séparation par distillation cryogénique en 4, 5 et 6.

Plus précisément, le mélange Kr/Xe/CF₄ contenant des traces d'oxygène résiduel et éventuellement d'autres impuretés volatiles résiduelles, tels des traces d'azote ou d'argon, est d'abord séparé dans une première colonne 4 de distillation cryogénique, de manière à, d'une part, éliminer (en 7) l'oxygène et les autres impuretés volatiles susceptibles d'être présentes dans le mélange Kr/Xe/CF₄ et, d'autre part, de récupérer un mélange constitué essentiellement de krypton, de xénon et de CF₄, lequel est envoyé alors vers une deuxième colonne de distillation 5 où il est séparé pour produire, d'une part, du krypton ultra-pur (en 8) qui est récupéré et, d'autre part, un mélange gazeux contenant essentiellement du xénon (Xe) et du CF₄, ainsi que des traces résiduelles de krypton (Kr).

Ce mélange Xe/CF₄ (avec traces de Kr) est envoyé ensuite vers une troisième colonne 6 de distillation cryogénique où il est distillé pour produire, d'une part, du xénon pur qui est récupéré (en 9) et, d'autre part, un mélange gazeux contenant du xénon, du krypton et du CF₄ en proportions variables, lequel est acheminé (en 10) jusqu'à une ou plusieurs membranes 11 pour y être purifié par perméation conformément au procédé de l'invention.

De préférence, on emploie un ou plusieurs modules membranaires à fibres creuses en tant que membranes.

Plus précisément, le mélange Kr/Xe/CF₄ alimente le ou les membranes 11 et on récupère côté gaz-déchet, c'est-à-dire ici côté retentât, les composés fluorés CF₄ ou un mélange gazeux non-perméant (gaz déchet) enrichi en CF₄ et, côté sortie, c'est-à-dire ici côté perméat, un mélange de perméation Xe/Kr contenant éventuellement du CF₄ résiduel, lequel mélange Xe/Kr contenant éventuellement du CF₄ résiduel peut être ensuite réacheminé vers l'alimentation du compresseur 1 où il est mélangé avec le gaz d'alimentation pour subir un nouveau cycle de purification.

En outre, le CF₄ produit peut être soit rejeté à l'atmosphère, soit récupéré pour d'autres utilisations ou pour être détruit.

Le procédé illustré sur la figure 1 est particulièrement adapté quand la sélectivité des membranes utilisées ne permet pas de séparer les composés avec une pureté suffisante.

Toutefois, si la sélectivité des membranes est élevée, on préfère procéder comme illustré sur la figure 2. En effet, sur la figure 2 a été schématisé un procédé de séparation des composants d'un mélange gazeux d'alimentation constitué essentiellement de krypton et de xénon et contenant, en outre, des impuretés fluorées CF₄, C₂F₆ et SF₆ et d'autres impuretés (CₙHₘ) en proportions variables.

Dans ce cas, le mélange d'alimentation est d'abord comprimé (en 1) à une pression d'environ 6 à 12 bars, puis soumis à une étape de catalyse oxydative (en 12), comme précédemment, pour convertir les traces éventuelles d'hydrocarbures en vapeur d'eau et CO₂, lesquels sont éliminés ensuite par séchage et/ou décarbonatation (en 13), comme expliqué pour la figure 1.

Le flux gazeux obtenu est alors envoyé vers plusieurs modules membranaires 14, 15 agencés en cascade.

Dans ce cas, en sortie perméat du premier module membranaire 14, on récupère un mélange de krypton et de xénon sensiblement exempt de composés fluorés, c'est-à-dire ne contenant des composés fluorés qu'à l'état de traces (^{<} 10 ppm de PFC), lequel mélange Kr/Xe/traces de composés fluorés peut ensuite, comme sur la figure 1, être refroidi (en 16) et subir une séparation par voie cryogénique en 17 (non détaillée) pour produire, d'une part, du krypton pur et, d'autre part, du xénon pur. Comme précédemment, l'oxygène résiduel peut aussi être éliminé par distillation cryogénique.

En outre, ici, en sortie retentât du premier module membranaire 14, on récupère (en 14) un mélange gazeux contenant les composés fluorés (CF₄, SF₆, C₂F₆) qui n'ont pas perméé, ainsi que du xénon et du krypton.

Ce mélange gazeux enrichi en composés fluorés est alors soumis à une deuxième étape de perméation (en 15), de façon à obtenir, en sortie retentât d'un deuxième module membranaire 15, un gaz contenant essentiellement les composés gazeux fluorés qui peuvent être recyclés et/ou éliminés, et, par ailleurs, en sortie perméat, un gaz mixte contenant des composés fluorés et la majeure partie du xénon et du krypton qui n'a pas perméé au travers du premier module membranaire 14 (voir ci-avant), lequel gaz mixte est ensuite renvoyé vers le compresseur 1, via la ligne 18, pour subir un nouveau cycle de purification en étant mélangé au gaz d'alimentation.

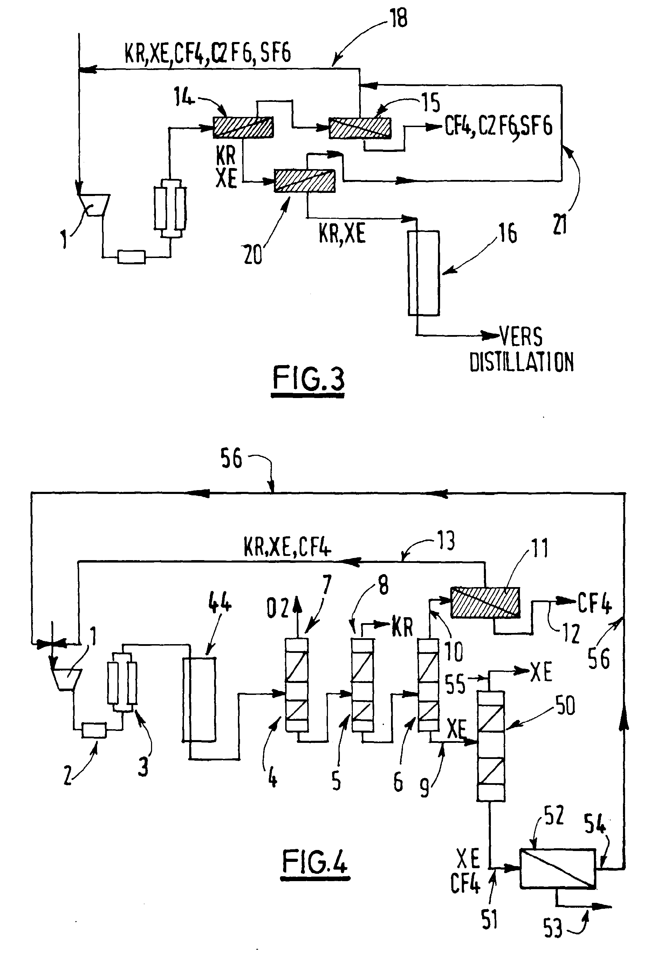

La figure 3 représente une variante de la figure 2 selon laquelle l'étagement des membranes a été modifié, de façon à pouvoir atteindre, par exemple, une pureté requise du flux gazeux Kr/Xe entrant dans l'unité 16 de refroidissement cryogénique.

En effet, on voit sur la figure 3 que le flux gazeux de perméation contenant essentiellement du krypton et du xénon, récupéré en sortie perméat de la membrane 14, est soumis, lui aussi, à une étape supplémentaire de perméation (en 20) avant d'être envoyé vers l'unité 16 de refroidissement cryogénique, couramment appelée boîte froide.

En outre, le flux récupéré en sortie retentât peut, par exemple, être recyclé comme expliqué ci-dessus pour la figure 2 et renvoyé vers le compresseur 1, via les lignes 21 et 18.

La figure 4 représente une variante de la figure 1, dans laquelle le xénon pur est récupéré (en 9) après distillation du mélange Xe/CF₄ (avec traces de Kr) dans la troisième colonne 6 de distillation cryogénique et acheminé vers une quatrième colonne 50 de distillation cryogénique où il subit une nouvelle séparation cryogénique de manière purifier le xénon en ses impuretés lourdes fluorées et/ou fluoro-soufrées éventuelles telles que SF₆ et C₂F₆ et récupérer ainsi du xénon encore plus pur (en 55), d'une part, et obtenir un flux de xénon pur mais pouvant contenir encore quelques impuretés fluorées et/ou fluoro-soufrées, d'autre part, lequel flux est acheminé, via la ligne 51, jusqu'à une ou plusieurs autres membranes 52 pour y être purifié par perméation conformément au procédé de l'invention.

Là encore, on récupère côté gaz-déchet, c'est-à-dire ici côté retentât, les composés fluorés et/ou fluoro-soufrés ou un mélange gazeux non-perméant enrichi en composés fluorés et/ou fluoro-soufrés (en 53) et, côté sortie, c'est-à-dire ici côté perméat (en 54), un mélange de production essentiellement du Xe qui peut être ensuite ré-acheminé, via la ligne 56, vers l'alimentation du compresseur 1 où il est mélangé avec le gaz d'alimentation pour subir un nouveau cycle de purification.

En outre, les impuretés fluorées et/ou fluoro-soufrées produites (en 53) peuvent être soit rejetées à l'atmosphère, soit récupéré pour d'autres utilisations ou pour être détruit.

Bien entendu, selon les sélectivités réelles des membranes, la nature des impuretés et leurs teneurs, on peut combiner les schémas précédents ou décliner l'utilisation des membranes selon des modalités différentes.

Par ailleurs, la simplicité de mise en oeuvre des membranes rend très compétitif le procédé d'élimination des CF₄, C₂F₆, SF₆ selon l'invention en comparaison des procédés alternatifs cités dans l'état de l'art.

Dans le cadre de l'invention, on utiliser préférentiellement des membranes commercialisée par la Société MEDAL.

Selon une première application, les gaz ou mélanges gazeux de xénon et/ou krypton purifiés par le procédé selon l'invention sont particulièrement adaptés à une utilisation en tant que gaz d'isolation inter-parois pour élément étanche à plusieurs vitrages ou à plusieurs parois séparées par un gaz d'isolation, en particulier les fenêtres à double vitrage.

Selon une deuxième application, les gaz ou mélanges gazeux de xénon et/ou krypton purifiés par le procédé selon l'invention sont particulièrement adaptés à une utilisation en tant que gaz de propulsion plasmique pour véhicule ou pour une structure propulsé par un plasma de gaz, en particulier pour satellite à propulsion plasmique.

## Revendications

1. Procédé pour éliminer au moins une partie des composés gazeux fluorés et/ou fluoro-soufrés présents dans un flux gazeux d'alimentation contenant du xénon et du krypton, dans lequel :
(i) on met en contact le flux gazeux d'alimentation contenant du xénon et du krypton et au moins lesdits composés gazeux fluorés et/ou fluoro-soufrés avec au moins une première membrane,
(ii) on récupère, côté sortie d'au moins ladite première membrane, un gaz de production contenant du xénon et du krypton débarrassé d'au moins une partie desdits composés gazeux fluorés et/ou fluoro-soufrés.

2. Procédé pour éliminer au moins une partie des composés gazeux fluorés et/ou fluoro-soufrés présents dans un gaz d'alimentation formé d'un mélange de xénon et de krypton, dans lequel :
(i) on met en contact le gaz d'alimentation contenant du xénon et du krypton et desdits composés gazeux fluorés et/ou fluoro-soufrés avec au moins une première membrane,
(ii) on récupère, côté sortie d'au moins ladite première membrane, un gaz de production formé d'un mélange de xénon et/ou de krypton débarrassé d'au moins une partie desdits composés gazeux fluorés et/ou fluoro-soufrés,
(iii) on soumet le gaz de production formé d'un mélange de xénon et/ou de krypton à au moins une étape de distillation cryogénique,
(iv) on récupère, après distillation cryogénique, un flux de krypton approximativement exempt desdits composés gazeux fluorés et/ou fluoro-soufrés, et/ou un flux de xénon approximativement exempt desdits composés gazeux fluorés et/ou fluoro-soufrés.

3. Procédé pour éliminer au moins une partie des composés gazeux fluorés et/ou fluoro-soufrés présents dans un gaz de recyclage issu d'un procédé générant au moins ledit gaz de recyclage, ledit gaz de recyclage contenant du xénon et/ou du krypton et contenant, en outre, des composés gazeux fluorés et/ou fluoro-soufrés en tant qu'impuretés, dans lequel :
(i) on met en contact le gaz de recyclage contenant du xénon et/ou du krypton et desdits composés gazeux fluorés et/ou fluoro-soufrés avec au moins une première membrane,
(ii) on récupère, côté sortie d'au moins ladite première membrane, un gaz de production contenant du xénon et/ou du krypton débarrassé d'au moins une partie desdits composés gazeux fluorés et/ou fluoro-soufrés, de préférence au moins une partie dudit gaz de production étant ensuite envoyée vers le procédé générant au moins ledit gaz de recyclage pour y être éventuellement réutilisé.

4. Procédé selon l'une des revendications 1 à 3, caractérisé en ce qu'à l'étape (ii), on récupère, côté gaz-déchet de ladite première membrane, un flux de gaz-déchet contenant au moins une partie desdits composés gazeux fluorés et/ou fluoro-soufrés.

5. Procédé selon l'une des revendications 1 à 4, caractérisé en ce que le flux gazeux d'alimentation contient au moins 40% de xénon et/ou de krypton, de préférence au moins 70% de xénon et/ou de krypton, et/ou le flux gazeux d'alimentation contient du xénon et du krypton en une proportion d'au plus 99,999% et/ou en ce que le flux gazeux d'alimentation contient de 1 ppb à 300 000 ppm de composés fluorés ou fluoro-soufrés, de préférence de 10 ppb à 50 000 ppm de composés fluorés ou fluoro-soufrés.

6. Procédé selon l'une des revendications 1 à 5, caractérisé en ce que les composés fluorés ou fluoro-soufrés à éliminer sont choisis parmi les composés CF₄, C₂F₆, SF₆ et leurs mélanges, de préférence le flux gazeux d'alimentation contient de 0.01 ppm à 1000 ppm de CF₄, de 0.01 ppm à 1000 ppm de SF₆ et/ou de 0.01 ppm à moins de 200 ppm de C₂F₆.

7. Procédé selon l'une des revendications 1 à 6, caractérisé en ce que le flux gazeux de production récupéré à l'étape (ii), du côté sortie de ladite première membrane et contenant au moins une partie du xénon et/ou du krypton, est introduit par l'entrée d'alimentation d'au moins une deuxième membrane.

8. Procédé selon l'une des revendications 1 à 7, caractérisé en ce que le flux de gaz-déchet récupéré à l'étape (ii), du côté gaz-déchet de ladite première membrane et contenant au moins une partie desdits composés gazeux fluorés et/ou fluoro-soufrés est introduit par l'entrée d'alimentation d'au moins une troisième membrane.

9. Procédé selon l'une des revendications 1 à 8, caractérisé en ce que le flux gazeux d'alimentation est à une température de -10°C à +100°C, de préférence de 0°C à + 60°C, et/ou à une pression de 1 bar à 50 bars, de préférence le flux gazeux d'alimentation est comprimé à une pression de 3 bars à 30 bars.

10. Procédé selon l'une des revendications 1 à 9, caractérisé en ce qu'au moins une membrane est en polymère.

11. Procédé selon l'une des revendications 1 à 10, caractérisé en ce que le flux gazeux d'alimentation contient, en outre, des impuretés choisies parmi les hydrocarbures (CₙHₘ) et en ce qu'on élimine au moins une partie desdites impuretés par catalyse oxydative, en présence d'oxygène, desdites impuretés en CO₂ et H₂O, de préférence à une température comprise entre 150°C et 500°C.

12. Procédé selon l'une des revendications 1 à 11, caractérisé en ce qu'on élimine, par adsorption ou séchage sur au moins un adsorbant, au moins une partie des impuretés CO₂ et H₂O produites par catalyse oxydative ou éventuellement présentes dans le flux de gaz d'alimentation, de préférence au moins un adsorbant est choisi parmi les zéolites, les alumines ou les gels de silice.

13. Procédé selon l'une des revendications 1 à 12, caractérisé en ce que le gaz de production récupéré à l'étape (ii) est soumis à au moins une étape de refroidissement à une température inférieure à -5°C, de préférence à une température de -10°Cà -150°C.

14. Procédé selon l'une des revendications 1 à 13, caractérisé en ce que le flux gazeux de production récupéré à l'étape (ii), du côté sortie de la première membrane est introduit par l'entrée d'alimentation d'une deuxième membrane, en ce qu'on récupère, côté gaz-déchet de ladite deuxième membrane, un deuxième gaz-déchet et en ce qu'on introduit ledit deuxième gaz gaz-déchet dans le flux gazeux d'alimentation.

15. Procédé selon l'une des revendications 1 à 14, caractérisé en ce que le flux de gaz-déchet récupéré à l'étape (ii), du côté gaz-déchet de la première membrane est introduit par l'entrée d'alimentation d'une troisième membrane, en ce qu'on récupère, côté sortie de ladite troisième membrane, un deuxième gaz de production et en ce qu'on introduit ledit deuxième gaz de production dans le flux gazeux d'alimentation.

16. Procédé pour éliminer au moins une partie des composés gazeux fluorés ou fluoro-soufrés, en particulier CF₄, C₂F₆ et/ou SF₆, présents dans un flux gazeux de xénon et/ou de krypton, de préférence un mélange de xénon et de krypton, dans lequel au moins une partie desdits composés fluorés est séparée par une ou plusieurs étapes de perméation.

17. Installation pour éliminer les composés gazeux fluorés et/ou fluoro-soufrés présents dans un gaz d'alimentation formé de xénon et/ou de krypton, susceptible de mettre en oeuvre un procédé selon l'une des revendications 1 à 16, comprenant :
- au moins une source d'un gaz d'alimentation contenant du xénon et/ou du krypton et des composés gazeux fluorés et/ou fluoro-soufrés à éliminer,
- des moyens de compression du gaz d'alimentation,
- au moins une membrane reliée, par sa sortie de production, à des moyens de récupération de gaz de production formé de xénon et/ou de krypton et débarrassé d'au moins une partie desdits composés gazeux fluorés et/ou fluoro-soufrés.

18. Installation pour éliminer les composés gazeux fluorés et/ou fluoro-soufrés présents dans un gaz d'alimentation formé de xénon et/ou de krypton, susceptible de mettre en oeuvre un procédé selon l'une des revendications 1 à 16, comprenant :
- au moins une source d'un gaz d'alimentation contenant du xénon et/ou du krypton et des composés gazeux fluorés et/ou fluoro-soufrés à éliminer,
- des moyens de compression du gaz d'alimentation,
- au moins une membrane, reliée par sa sortie de production à des moyens de récupération de gaz de production formé de xénon et/ou de krypton et débarrassé d'au moins une partie desdits composés gazeux fluorés et/ou fluoro-soufrés.
- des moyens de refroidissement à température cryogénique du gaz de production situés en aval d'au moins ladite membrane,
- des moyens de distillation cryogénique du gaz de production situés en aval des moyens de refroidissement à température cryogénique,
- des moyens de récupération, situés en aval des moyens de distillation cryogénique, pour récupérer du krypton approximativement exempt desdits composés gazeux fluorés et/ou fluoro-soufrés, et/ou du xénon approximativement exempt desdits composés gazeux fluorés et/ou fluoro-soufrés.

19. Installation selon la revendication 17 ou 18, caractérisée en ce qu'elle comporte, en outre, au moins une membrane reliée, par sa sortie gaz-déchet, à des moyens de recyclage de gaz-déchet contenant du xénon et/ou du krypton et éventuellement des composés gazeux fluorés et/ou fluoro-soufrés, lesdits moyens de recyclage de gaz-déchet étant reliés, en outre, à l'entrée d'alimentation desdits moyens de compression, de manière à pouvoir alimenter lesdits moyens de compression avec au moins une partie dudit gaz-déchet.

20. Utilisation d'un gaz ou d'un mélange gazeux contenant du xénon et/ou krypton substantiellement exempt de composés gazeux fluorés ou fluoro-soufrés, en particulier CF₄, C₂F₆ et/ou SF₆, susceptible d'avoir été purifié par un procédé selon l'une des revendications 1 à 16, en tant que gaz d'isolation inter-parois pour élément étanche à plusieurs vitrages ou à plusieurs parois séparées par un gaz d'isolation, en particulier les fenêtres à double vitrage.

21. Utilisation d'un gaz ou d'un mélange gazeux contenant du xénon et/ou krypton substantiellement exempt de composés gazeux fluorés ou fluoro-soufrés, en particulier CF₄, C₂F₆ et/ou SF₆, susceptible d'avoir été purifié par un procédé selon l'une des revendications 1 à 16, en tant que gaz de propulsion plasmique pour véhicule ou pour une structure propulsé par plasma de gaz, en particulier pour satellite à propulsion plasmique.
